# EUROPÄISCHE PATENTANMELDUNG

(11) **EP 4 520 891 A1**
(43) Veröffentlichungstag der Anmeldung: **12.03.2025**
(21) Anmeldenummer: 24197162.1
(22) Anmeldetag: 29.08.2024
(51) Int. Cl.: E04F 13/08

(54) **AGRAFFE UND SYSTEM UMFASSEND AGRAFFE UND AGRAFFENPROFIL**

(30) Priorität: 06.09.2023 AT 507092023
(71) Anmelder: SLAVONIA BAUBEDARF GmbH, A-1110 Wien (AT)
(72) Erfinder: Pavelka, Miroslav, 1110 Wien (AT); Reichl, Bernhard, 1110 Wien (AT)
(74) Vertreter: Puchberger & Partner Patentanwälte

(57) **Zusammenfassung**

Der Erfindung betrifft eine Agraffe (1) zur Befestigung einer Fassadenplatte (2) an einer Wandstütze (3) einer Wand, umfassend:
a. einen im Wesentlichen planen Rückenschenkel (4), der zur Befestigung an der Fassadenplatte (2) ausgebildet ist, sowie
b. zwei sich im Wesentlichen orthogonal vom Rückenschenkel (4) erstreckende Halteschenkel (5, 6) zur formschlüssigen Verbindung mit einem, an der Wandstütze (3) angeordneten Agraffenprofil (7),
c. am Rückenschenkel (4) eine in Längsrichtung der Agraffe (1) verlaufende Längsnut (8) mit Ausnehmungen (9), wobei die Längsnut (8) und die Ausnehmungen (9) dazu ausgebildet sind, unterschiedliche Verbindungsmittel, insbesondere unterschiedlich geformte Hinterschnittanker (10) und/oder Blindbefestiger, zur bündigen Befestigung der Fassadenplatte (2) an der Agraffe (1) formschlüssig aufzunehmen.

## Beschreibung

Die Erfindung betrifft eine Agraffe zur unsichtbaren bzw. verdeckten Befestigung einer Fassadenplatte bzw. Fassadenbekleidung an einer Unterkonstruktion, welche an einer Wand, Mauer, Holz- bzw. Stahlkonstruktion oder Decke fixiert ist. Die Erfindung betrifft ferner ein System umfassend eine derartige Agraffe und ein Agraffenprofil.

Agraffensysteme mit einer Agraffe und einem Agraffenprofil sind zur verdeckten Montage von Fassadenplatten für, insbesondere vorgehängte hinterlüftete, Fassaden (VHF) bekannt. Hierbei wird die Agraffe mit der Fassadenplatte fest verbunden. Das Agraffenprofil wird fest mit einem vertikalen Profil verbunden, welches über Wandstützen mit einer Mauer verbunden ist. Das Agraffenprofil kann direkt auf Profilen an der Wand fixiert sein oder an einer Holz- bzw. Stahlunterkonstruktion oder auf beliebigen Materialien befestigt sein. Anschließend wird die Agraffe mit der daran befestigten Fassadenplatte an dem Agraffenprofil eingehängt. Nach diesem Schritt werden die Fassadenplatten korrekt ausgerichtet, beispielsweise durch Stellschrauben, und in ihrer Lage-Position fixiert.

Fassadenplatten für unsichtbar bzw. verdeckt befestigte Fassaden sind meist durch Hinterschnittanker an den Agraffen befestigt. Hinterschnittanker gibt es in unterschiedlicher Bauart und von unterschiedlichen Herstellern. Durch die unterschiedlich geformten Hinterschnittanker ist es generell notwendig, jeweils eine bestimmte Agraffe für einen bestimmten Hinterschnittanker zu wählen.

Das führt dazu, dass viele verschiedene Agraffenmodelle mit den unterschiedlichsten Stanzungen bzw. Bohrungen im Handel erhältlich sind, die nur für eine geringe Anzahl an Hinterschnittankermodellen geeignet sind. Es muss also darauf geachtet werden, das Agraffensystem mit den Hinterschnittankern (bzw. Schrauben, Nieten) abzustimmen.

Dies führt zu signifikantem Mehraufwand, da für unterschiedliche Projekte oft Materialien unterschiedlicher Hersteller verwendet werden. Nach Abschluss eines Projekts verbleibende Bestände von Hinterschnittankern oder Agraffen können nicht für zukünftige Projekte verwendet werden, da dort andere Modelle benutzt werden.

Die Aufgabe der vorliegenden Erfindung ist somit, die Probleme des Standes der Technik zu überwinden und eine multifunktionale Agraffe bereitzustellen, die insbesondere Hinterschnittanker oder ähnliche Befestigungsmittel wie Blindbefestiger verschiedener Hersteller aufnehmen kann. Eine weitere Aufgabe der Erfindung kann darin gesehen werden, eine kosteneffiziente und flexible Möglichkeit zur Fassadenplattenbefestigung bereitzustellen. Eine weitere Aufgabe der Erfindung kann die Erhöhung der Sicherheit vor, während und/oder nach dem Aufhängen der Fassadenplatte sein.

Diese und andere Probleme werden durch eine **Agraffe gemäß Anspruch** 1 gelöst.

Eine erfindungsgemäße Agraffe zur Befestigung einer Fassadenplatte an einer Wandstütze einer Wand umfasst einen im Wesentlichen planen Rückenschenkel, der zur Befestigung an der Fassadenplatte ausgebildet ist. Ferner umfasst die Agraffe zwei sich im Wesentlichen orthogonal vom Rückenschenkel erstreckende Halteschenkel zur formschlüssigen Verbindung mit einem an der Wandstütze angeordneten Agraffenprofil.

Das Agraffenpofil kann dabei direkt oder über weitere Tragelemente an der Wandstütze angeordnet sein.

Am Rückenschenkel ist eine in Längsrichtung der Agraffe verlaufende Längsnut mit Ausnehmungen vorgesehen ist, wobei die Längsnut und die Ausnehmungen dazu ausgebildet sind, unterschiedliche Verbindungsmittel, insbesondere unterschiedlich geformte Hinterschnittanker und/oder Blindbefestiger, zur bündigen Befestigung der Fassadenplatte an der Agraffe formschlüssig aufzunehmen.

In der Regel sind an den Fassadenplatten an vorbestimmten Stellen Aussparungen in Form von Hinterschnitten oder vorgebohrten Löchern angeordnet, um Hinterschnittanker und/oder Blindbefestiger aufzunehmen.

Beispielsweise können Agraffen und Fassadenplatten durch die bekannten Hinterschnittanker der Firma Keil, aber auch durch Hinterschnittanker oder Blindbefestiger der Firma Fischer, insbesondere des Typs Zyklon Plattenanker FZP II, oder der Firma SFS, insbesondere des Typs TUF-S, verbunden sein. Eine erfindungsgemäße Agraffe ist dazu ausgebildet, derartig unterschiedlich geformte Hinterschnittanker und/oder Blindbefestiger aufzunehmen. Dies wird dadurch erreicht, dass die Ausnehmungen an die jeweiligen Hinterschnittanker und/oder Blindbefestiger angepasst sind.

Die Ausnehmungen in der Längsnut sind vorzugsweise kreisförmig, können aber auch rechteckig, dreieckig, viereckig, sechseckig, achteckig, oval oder als Langloch ausgebildet sein. Gegebenenfalls können die Ausnehmungen auch ein Gewinde haben. Die Form und Ausbildung der Ausnehmungen ist vorzugsweise an den aufzunehmenden Hinterschnittanker und/oder Blindbefestiger angepasst.

Zudem erlaubt die Anordnung der Ausnehmungen in der Längsnut eine bündige Befestigung der Fassadenplatte an der Agraffe unabhängig vom verwendeten Hinterschnittanker und/oder Blindbefestiger, da dieser in der Längsnut Platz findet. Die Längsnut hat eine Tiefe von etwa 2 mm bis 3 mm und eine Breite von etwa 10 mm bis 15 mm.

Zur formschlüssigen Verbindung von Agraffe und Agraffenprofil wird die Agraffe in das Agraffenprofil eingehängt.

Formschlüssig bedeutet dabei das Eingreifen eines Elements in ein anderes, wobei die Bewegung in mindestens eine Richtung eingeschränkt ist. Die Längsnut verläuft bei vertikalem Einhängen der Agraffe im Wesentlichen horizontal.

Erfindungsgemäß kann vorgesehen sein, dass ein oberer Halteschenkel der Agraffe als im Wesentlichen C-förmiges Winkelprofil ausgebildet ist, dessen Ende beabstandet und im Wesentlichen parallel zum Rückenschenkel verläuft, und der einen Schenkelabschnitt aufweist, der sich im Wesentlichen orthogonal zum Rückenschenkel erstreckt und der zumindest eine Schenkelbohrung aufweist.

Die Form des Winkelprofils des oberen Halteschenkels ermöglicht eine formschlüssige Verbindung zwischen der Agraffe und einem Agraffenprofil. Die Schenkelbohrung dient der Aufnahme von Stellmitteln.

Erfindungsgemäß kann vorgesehen sein, dass ein unterer Halteschenkel der Agraffe als im Wesentlichen Z-förmiges Winkelprofil ausgebildet ist, dessen Ende beabstandet und im Wesentlichen parallel zum Rückenschenkel verläuft, und der im Wesentlichen orthogonal vom Rückenschenkel vorsteht, sodass zwischen dem Rückenschenkel und dem unteren Halteschenkel eine Eingriffsnut gebildet ist. Die Z-Form des Winkelprofils ermöglicht die Bildung einer Eingriffsnut zur Aufnahme von Teilen eines Agraffenprofils, und führt somit zu einer sichereren Verbindung zwischen den beiden Elementen.

Ein wesentlicher Aspekt bei der Fassadenplattenbefestigung ist das Einhängen der Fassadenplatte mit Agraffe in das befestigte Agraffenprofil. Das Einhängen erfordert hohe Konzentration und Präzision der Arbeiter, um Unfälle oder Fehlmontagen zu vermeiden. Dazu kommt, dass die Fassadenplatten zueinander ausgerichtet werden müssen. Hierfür kommen meist Stellschrauben zum Einsatz, durch die die Agraffen in ihrer Höhe verstellt werden können. Bei zu starkem Eindrehen der Schraube besteht aber die Gefahr, dass die Agraffe aus dem Agraffenprofil gehoben wird, da bei den meisten Systemen am Markt keine optischen oder formschlüssigen Sicherungsmerkmale vorhanden sind.

Zur Behebung dieses Problems kann vorgesehen sein, dass ein Justiermittel, insbesondere eine Justierschraube, vorgesehen ist. Die Justierschraube kann zur Justierung der Position der Agraffe relativ zum Agraffenprofil in die Schenkelbohrung eingeschraubt werden. Die Länge der Justierschraube kann geringer sein als die Länge des umgebogenen Endes des oberen Halteschenkels, sodass die eingeschraubte Justierschraube niemals über das Ende des oberen Halteschenkels ragt. Dadurch kann die Agraffe in eingehängtem Zustand nicht vom Agraffenprofil abrutschen, da der Haltschenkel das Agraffenprofil stets umfassen bzw. umgreifen kann.

Erfindungsgemäß kann vorgesehen sein, dass im oberen Halteschenkel zwei oder mehr Schenkelbohrungen vorgesehen sind, wobei eine erste Schenkelbohrung zur Aufnahme einer Justierschraube und eine zweite Schenkelbohrung zur Aufnahme eines Fixiermittels, insbesondere einer Selbstbohrschraube zur Verschraubung der Agraffe mit dem Agraffenprofil, ausgebildet ist. Dadurch können Agraffe und Agraffenprofil nach der Montage und dem Ausrichten der Fassadenplatte fest miteinander verbunden werden, sodass die Fassadenplatte in einer Lage-Position fixiert werden kann.

Erfindungsgemäß kann vorgesehen sein, dass der Rückenschenkel eine nach unten spitz zulaufende Klemmlasche bildet, sodass die Eingriffsnut einen sich zum Ende des Rückenschenkels konisch erweiternden Querschnitt aufweist.

Durch die Klemmlasche kann bei der Montage einer Fassadenplatte die Agraffe auf das Agraffenprofil aufgesetzt werden, ohne dass die Agraffe vollständig auf das Agraffenprofil gehängt ist. Die Klemmwirkung der Klemmlasche verhindert bei unvollständigem Aufhängen der Agraffe ein Kippen oder Fallen der Agraffe mitsamt Fassadenplatte.

Erfindungsgemäß kann vorgesehen sein, dass sich die Eingriffsnut in einem Winkel von etwa 1° bis etwa 10°, insbesondere etwa 5°, zum Ende des Rückenschenkels erweitert. Dieser Winkel entspricht dem Winkel des sich konisch erweiternden Querschnitts der Klemmlasche. Durch den Winkel wird eine verbesserte Klemmwirkung erzielt.

Erfindungsgemäß kann vorgesehen sein, dass sich die Klemmlasche weiter nach unten erstreckt als der untere Halteschenkel, insbesondere um eine Distanz von etwa 0,5 mm bis etwa 5 mm. Dieses Merkmal hat sich in der Praxis als vorteilhaft erwiesen, da dadurch die Klemmwirkung verbessert wird.

Erfindungsgemäß kann vorgesehen sein, dass die Agraffe aus einem Metall oder einer Metalllegierung, bevorzugt aus Aluminium oder einer Aluminiumlegierung, insbesondere aus Aluminium EN-AW 6063 T66, gebildet ist oder dieses Material umfasst. Die Agraffe kann ein Gewicht von etwa 35 g bis etwa 50 g aufweisen, insbesondere ein Gewicht von etwa 42 g.

Erfindungsgemäß kann vorgesehen sein, dass die erfindungsgemäße Agraffe ein flexibles Einlegeelement umfasst, insbesondere aus Moosgummi, zur Anordnung zwischen dem Rückenschenkel und der Fassadenplatte, wobei das Einlegeelement Aussparungen zur Aufnahme von zumindest einem Verbindungsmittel, insbesondere einem Hinterschnittanker und/oder Blindbefestiger, umfasst, und wobei die Fläche des flexiblen Einlegeelements vorzugsweise kleiner oder gleich der Fläche des Rückenschenkels ist.

Das flexible Einlegeelement kann Unebenheiten, die durch Hinterschnittanker und/oder Blindbefestiger bzw. durch Unebenheiten an der Rückseite der Fassadenplatte entstehen können, ausgleichen, sodass eine bündige Befestigung der Fassadenplatte an der Agraffe trotz Unebenheiten möglich ist. Das Einlegeelement dient ebenfalls als elastische Koppelung zwischen einer spröden Fassadenplatte und dem Agraffenprofil und agiert als Druckfeder und Dämpfung von Geräuschen, die durch Vibrationen bzw. Bewegungen wie beispielweise durch Wind auftreten können.

Die Erfindung erstreckt sich ferner auf ein **System umfassend eine erfindungsgemäße Agraffe und ein Agraffenprofil** mit einem im Wesentlichen planen Basisschenkel, wobei die Agraffe und das Agraffenprofil formschlüssig verbindbar oder verbunden sind. Wenn die Agraffe und das Agraffenprofil miteinander verbunden sind, dann sind sie derart verbunden, dass die Agraffe lediglich seitlich herausgeschoben oder vertikal nach oben herausgehoben werden kann.

Die Kanten der Agraffe können gefast oder abgerundet sein, sodass ein leichteres Gleiten am Agraffenprofil möglich ist und die beiden Komponenten sich nicht auf unerwünschte Weise ineinander verhaken. Die Agraffe und das Agraffenprofil können auch mit einer Pulverbeschichtung oder einem Eloxal versehen sein bzw. mit einer Beschichtung zur Verbesserung der Gleiteigenschaften zueinander.

Gegebenenfalls ist vorgesehen, dass das **Agraffenprofil** einen **oberen Profilschenkel** aufweist, der schmäler als der obere Halteschenkel der Agraffe ist, sodass der obere Halteschenkel der Agraffe den oberen Profilschenkel des Agraffenprofils formschlüssig umfassen kann. Diese Ausführungsform hat sich in der Praxis zur Befestigung der Agraffe an dem Agraffenprofil als vorteilhaft erwiesen.

Gegebenenfalls ist vorgesehen, dass das **Agraffenprofil** einen **unteren Profilschenkel** mit einem umgebogenen Ende umfasst, das als ein sich zu seinem Ende verjüngendes Keilprofil ausgebildet ist, dessen Querschnitt im Wesentlichen dem Querschnitt der Eingriffsnut der Agraffe entspricht, sodass das Keilprofil formschlüssig in die Eingriffsnut der Agraffe einbringbar ist. Diese Ausführungsform ermöglicht eine bessere Klemmwirkung zwischen Agraffenprofil und Klemmlasche. Gegebenenfalls ist vorgesehen, dass das Keilprofil des Agraffenprofils im Wesentlichen so lang ist wie die Eingriffsnut der Agraffe.

Weitere erfindungsgemäße Merkmale ergeben sich aus den Ansprüchen, den Zeichnungen und der Figurenbeschreibung. Die Erfindung wird nachfolgend anhand eines Ausführungsbeispiels erläutert.
Figur 1a zeigt eine schematische Querschnittsansicht eines erfindungsgemäßen Agraffenprofils;
Figur 1b zeigt eine schematische Schrägansicht eines erfindungsgemäßen Agraffenprofils;
Figur 2a zeigt eine schematische Querschnittsansicht einer erfindungsgemäßen Agraffe;
Figur 2b zeigt eine schematische Schrägansicht einer erfindungsgemäßen Agraffe;
Figur 3 zeigt eine Querschnittsansicht eines erfindungsgemäßen Agraffensystems.

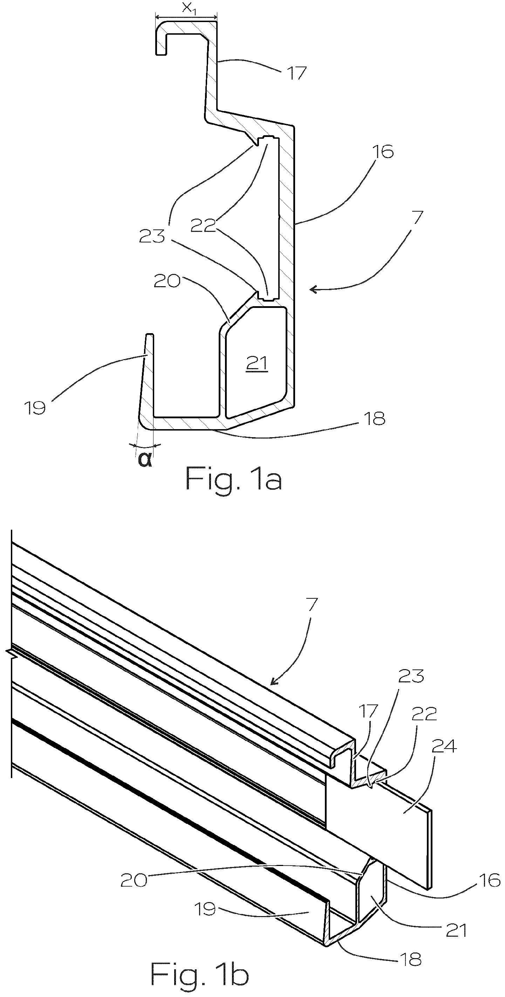

**Figur 1a und 1b** zeigen eine schematische Querschnittsansicht und eine schematische Schrägansicht eines erfindungsgemäßen Agraffenprofils 7. Das Agraffenprofil 7 ist dazu ausgebildet, lösbar an der Außenwand eines Gebäudes, einer daran abgebrachten Wandstütze 3 oder einem daran angebrachten Tragprofil oder direkt an der Wand bzw. an einer Holz- oder Stahlkonstruktion angebracht zu werden. Im Zusammenspiel mit einzelnen, an Fassadenplatten 2 befestigten Agraffen 1 ermöglicht das Agraffenprofil 7 die von außen unsichtbare Befestigung hinterlüfteter Fassadenplatten 2 an einer Mauer oder Wand oder einer Tragkonstruktion.

Das Agraffenprofil 7 hat in diesem Ausführungsbeispiel eine Länge von etwa 3 m und ein Gewicht von etwa 0,685 kg pro Laufmeter. In anderen Ausführungsformen der Erfindung sind längere oder kürzere Agraffenprofile 7 vorgesehen. Es besteht aus Aluminium EN-AW 6063 T66, wobei aber auch Ausführungsformen mit anderen Materialien vorgesehen sind.

Das Agraffenprofil 7 weist einen Basisschenkel 16 mit einer im Wesentlichen ebenen Basisfläche auf. Das Agraffenprofil 7 wird an dem Basisschenkel 16 mit der Außenwand eines Gebäudes, einer daran angebrachten Wandstütze 3 oder einem daran angebrachten Tragprofil angebracht, beispielsweise angeschraubt.

Zu beiden Seiten des Basisschenkels 16 erstreckt sich ein Profilschenkel 17, 18 im Wesentlichen orthogonal zum Basisschenkel 16. Der obere Profilschenkel 17 ist im Wesentlichen C-förmig und weist ein kurzes umgebogenes Ende auf, das parallel zum Basisschenkel 16 verläuft.

Ein Teil des unteren Profilschenkels 18 verläuft im Wesentlichen orthogonal zum Basisschenkel 16. Der untere Profilschenkel 18 weist außerdem ein als Keilprofil 19 ausgebildetes umgebogenes Ende auf, dessen nach innen weisende Fläche parallel zum Basisschenkel 16 verläuft. Das Keilprofil 19 hat einen konischen Querschnitt, sodass die Querschnittsfläche zum Ende hin abnimmt. Die nach außen weisende Fläche des Keilprofils 19 neigt sich zu diesem Zweck in einem Winkel α von etwa 5° relativ zur nach innen weisenden Fläche des Keilprofils 19.

Im Querschnitt bildet das Agraffenprofil 7 mit dem Basisschenkel 16, den beiden Profilschenkeln 17, 18 und den umgebogenen Enden in etwa eine C-Form und ist zur Verbindung mit einer Agraffe 1 geeignet. Die Kanten des Agraffenprofils 7 sind gefast oder abgerundet.

Zur Versteifung und Verstärkung des Agraffenprofils 7 verbindet ein L-förmiger Steg 20 mit abgerundeter Ecke den unteren Profilschenkel 18 und den Basisschenkel 16, sodass im Innenraum des Agraffenprofils 7 ein Hohlraum 21 gebildet wird. Das Gewicht des Agraffenprofils 7 wird durch den Steg 20 nur geringfügig erhöht.

An beiden Enden des Basisschenkels 16 befindet sich im Innenraum des Agraffenprofils 7 eine Nut 22. Zur Bildung der Nuten 22 sind am oberen Profilschenkel 17 und am Steg 20 nach innen weisende Vorsprünge 23 vorgesehen. Die beiden Nuten 22 sind einander zugewandt und bilden eine Führung zur formschlüssigen Aufnahme eines, in Fig. 1b gezeigten, Einschubelements 24. In diesem Ausführungsbeispiel ist das Einschubelement 24 ein plattenförmiges Flachmetall, es kann aber auch aus Kunststoff gefertigt sein.

Das Einschubelement 24 ist dazu geeignet, eine formschlüssige Steckverbindung zwischen zwei baugleichen Agraffenprofilen 7 zu bilden. Dadurch können die Agraffenprofile 7 einfach aneinandergereiht, zusammengesteckt und justiert werden. Sie können auch einfach voneinander getrennt werden, solange sie nicht fest mit der Wandstütze 3 verschraubt sind. Eine leichtere Ausrichtung der Agraffenprofile 7 wird somit ermöglicht.

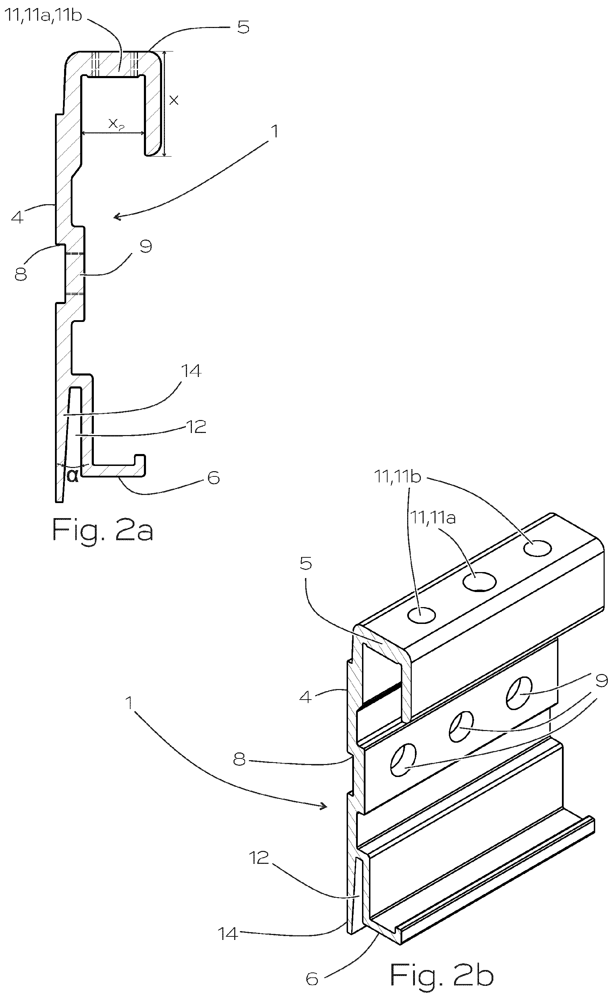

**Figur 2a und 2b** zeigen eine schematische Querschnittsansicht und eine schematische Schrägansicht einer erfindungsgemäßen Agraffe 1. Die Agraffe 1 ist so ausgebildet, dass sie in ein erfindungsgemäßes Agraffenprofil 7 eingreifen und eingehängt werden kann. Ferner ist die Agraffe 1 so ausgebildet, dass sie mit einer (nicht dargestellten) Fassadenplatte 2 kraftschlüssig und formschlüssig verbunden werden kann.

Eine derartige Fassadenplatte 2 hat mindestens eine Aussparung, beispielweise einen Hinterschnitt, zur Aufnahme eines Hinterschnittankers 10 und/oder eines Blindbefestigers. Die Fassadenplatte 2 kann unter anderem Aluminiumverbundmaterial, Faserzement, Feinsteinzeug, Glasfaserbeton, Glasplatten, Grünfassaden, HPL (High Pressure Laminate), Keramik, Naturstein, Verbundglas, Massivaluminium- oder Massivstahlplatten bzw. -kassetten, Photovoltaikpaneele, Putzträgerplatten, Alu-/Stahl-Siding, Terrakotta und/oder Ziegel umfassen.

Die Agraffe 1 ist in diesem Ausführungsbeispiel aus Aluminium EN-AW 6063 T66, kann aber in anderen Ausführungsbeispielen verschiedenen Längen sowie andere Materialien umfassen. Das Gewicht der Agraffe 1 beträgt etwa 42 g.

Die Agraffe 1 hat einen im Wesentlichen C-förmigen Querschnitt mit einem im Wesentlichen planen Rückenschenkel 4, der eine rechteckige Längsfläche hat, und zwei zumindest teilweise orthogonal zum Rückenschenkel 4 verlaufende Halteschenkel 5, 6. Der obere Halteschenkel 5 ist als C-förmiges Winkelprofil ausgebildet, sodass ein umgebogenes Ende gebildet wird. Das umgebogene Ende verläuft parallel zum Rückenschenkel 4 der Agraffe 1 und hat eine Länge von etwa 5 mm. Der obere Halteschenkel 5 erstreckt sich ausreichend weit, um beim Einhängen von oben den oberen Profilschenkel 17 des Agraffenprofils 7 umfassen zu können. Die Erstreckung x₂ des oberen Halteschenkels 5 ist also mindestens so groß wie die Erstreckung x₁ des oberen Profilschenkels 17 des Agraffenprofils 7. Die Kanten der Agraffe 1 sind abgerundet oder gefast ausgebildet.

Der obere Halteschenkel 5 weist an dem normal zum Rückenschenkel 4 stehenden Teil des Winkelprofils drei gleich zueinander beabstandete, radiale Schenkelbohrungen 11, 11a, 11b auf. Die mittlere Schenkelbohrung 11a weist einen Durchmesser auf, der zur Aufnahme einer nicht dargestellten Justierschraube 13 geeignet ist.

Die Justierschraube 13 ist in diesem Ausführungsbeispiel eine metrische Schraube gemäß ISO 7380 M6x14. Durch sie kann die Höhe der Agraffe 1 relativ zum Agraffenprofil 7 eingestellt werden. Zudem weist die Justierschraube 13 eine Länge auf, die kleiner als die Länge x des umgebogenen Endes des oberen Halteschenkels 5 ist.

Bei maximalem Eindrehen der Justierschraube 13 ist damit sichergestellt, dass das umgebogene Ende der im Agraffenprofil 7 eingehängten Agraffe 1 den oberen Profilschenkel 17 des Agraffenprofils 7 umgreift, da die Länge x größer ist als die Länge der Justierschraube 13. Dadurch wird selbst bei maximalem Eindrehen der Justierschraube 13 ein Herausfallen der Agraffe 1 aus dem Agraffenprofil 7 verhindert.

Nach dem Einstellen der Höhe der Agraffe 1 relativ zum Agraffenprofil 7 durch die Justierschraube 13 kann in zumindest eine der beiden äußeren Schenkelbohrungen 11b eine nicht dargestellte Fixierschraube eingeführt werden, wobei die Fixierschraube eine Selbstbohrschraube ist. Der Durchmesser der beiden äußeren Schenkelbohrungen 11b ist in dieser Ausführung so gewählt, dass eine Selbstbohrschraube mit 4,8 mm Durchmesser und 20 mm Länge verwendet werden kann. Die Agraffe 1 und das Agraffenprofil 7 können durch die Selbstbohrschraube formschlüssig verbunden werden.

Der untere Halteschenkel 6 hat einen im Wesentlichen Z-förmigen Querschnitt und weist zusätzlich ein umgebogenes Ende auf, das parallel zum Rückenschenkel 4 der Agraffe 1 verläuft. Der untere Halteschenkel 6 verläuft im Wesentlichen parallel zum Rückenschenkel 4 der Agraffe 1 und bildet mit dem Rückenschenkel 4 eine nach unten weisende, sich verjüngende Eingriffsnut 12 mit konischem Querschnitt. Beim Einhängen der Agraffe 1 in das Agraffenprofil 7 dient diese Eingriffsnut 12 dazu, dass die Agraffe 1 das Keilprofil 19 des unteren Profilschenkels 18 des Agraffenprofils 7 aufnehmen kann. Der Rückenschenkel 4 der Agraffe 1 bildet im Bereich der Eingriffsnut 12 also eine spitz nach unten zulaufende Klemmlasche 14.

Die Länge der Klemmlasche 14 ist so gewählt, dass sie weiter nach unten ragt als der untere Halteschenkel 6. Dadurch wird das Einhängen in das Agraffenprofil 7 erleichtert. Die Klemmlasche 14 hat einen konischen Querschnitt und verjüngt sich zu ihrer Spitze derart, dass sie in einem Winkel α von etwa 5° zum Rückenschenkel 4 verläuft. Dadurch ist die Dicke des Profils der Klemmlasche 14 am unteren Ende kleiner als am oberen Ende. Dies erleichtert das Einhängen der Agraffe 1 in das Agraffenprofil 7 und führt auch zu einer Pressung des Keilprofils 19 des unteren Profilschenkels 18 gegen die Klemmlasche 14.

Durch die Kombination aus Klemmlasche 14, Eingriffsnut 12 und unterem Halteschenkel 6 ist es möglich, bei der Montage der Fassadenplatte 2 diese temporär am Keilprofil 19 des unteren Profilschenkel 18 des Agraffenprofils 7 aufzusetzen und einzuspannen, ohne dass die Agraffe 1 mit der an ihr befestigten Fassadenplatte 2 herunterfällt. Dies ist vor allem bei schweren Fassadenplatten 2 von Vorteil, da die Fassadenplatte 2 mit den Agraffen 1 kurz auf den unteren Profilschenkel 18 des Agraffenprofils 7 aufgesetzt werden kann, bevor die Agraffe 1 vollständig eingehängt wird.

Nach dem ersten Aufsetzen der Agraffe 1 auf das Agraffenprofil 7 muss dieses inklusive Fassadenplatte 2 lediglich kurz angehoben und angeschoben werden, um ein vollständiges Einhängen der Fassadenplatte 2 erwirken zu können. Die abgerundeten bzw. gefasten Kanten der Agraffe 1 erleichtern zusätzlich das Gleiten am und Einrasten im Agraffenprofil 7. Das Risiko für Unfälle durch falsches oder unvollständiges Aufhängen wird dadurch minimiert.

Die Agraffe 1 weist an ihrem Rückenschenkel 4 eine Längsnut 8 auf, die drei gleich zueinander beabstandete, radiale Ausnehmungen 9 umfasst, die im Wesentlichen denselben Durchmesser aufweisen. Die Ausnehmungen 9 können aber auch unterschiedliche Durchmesser aufweisen. Die Ausnehmungen 9 sind so ausgebildet, dass sie Hinterschnittanker 10 bzw. Blindbefestiger verschiedener Hersteller aufnehmen können. Dadurch wird erreicht, dass die Agraffe 1 an Fassadenplatten 2 mit unterschiedlichen Hinterschnittankern 10 bzw. Blindbefestigern fixiert werden kann.

Die Längsnut 8 an dem Rückenschenkel 4 ist so ausgebildet, dass beispielsweise der Spannkeil des Keil-Hinterschnittankers 10 der Firma Keil formschlüssig und nicht drehbar in der Längsnut 8 anordenbar ist, sodass der Hinterschnittanker 10 einfach festgezogen werden kann.

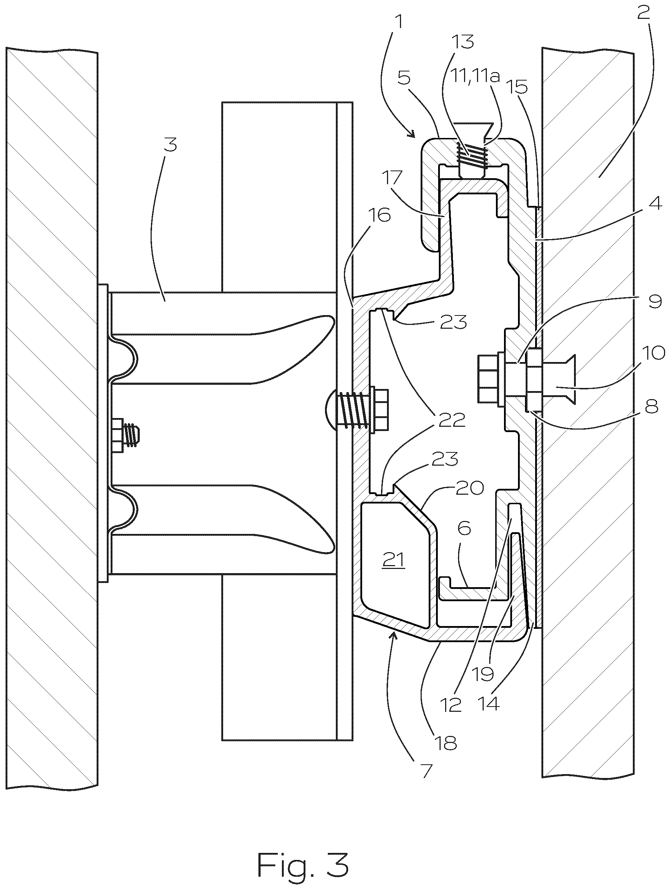

**Figur 3** zeigt eine Querschnittsansicht eines erfindungsgemäßen Agraffensystems. Das Agraffenprofil 7 und die Agraffe 1 sind wie in den Figuren 1a - 2b ausgebildet und die Agraffe 1 wurde bereits auf das Agraffenprofil 7 gehängt. Das Agraffenprofil 7 ist hierbei über eine an der Mauer befestigte Wandstütze 3 und ein an der Wandstütze 3 befestigtes Tragprofil mit der Mauer verbunden.

Das Agraffenprofil 7 ist in diesem Ausführungsbeispiel mit dem Tragprofil mit nicht dargestellten Fixierschrauben verschraubt.

Die Justierschraube 13 zur Höhenverstellung der Agraffe 1 ist in der mittleren Schenkelbohrung 11a des oberen Halteschenkels 5 angeordnet. Sie ist bis zu einer bestimmten Höhe eingeschraubt, um die Fassadenplatte 2 zu mindestens einer weiteren Fassadenplatte 2 auszurichten. Die Länge der Justierschraube 13 ist hierbei kürzer als die Länge x des umgebogenen Endes des oberen Halteschenkels 5.

Alternativ kann auch keine Justierschraube 13 vorgesehen sein. Somit würden die Halteschenkel 5, 6 vollständig auf den Profilschenkeln 17, 18 aufliegen. In diesem Fall würde das umgebogene Ende des unteren Profilschenkels 18 bündig in die Eingriffsnut 12 der Agraffe 1 eingreifen. Des Weiteren würde die Klemmlasche 14 der eingehängten Agraffe 1 über das Agraffenprofil 7 hinausragen.

In den anderen beiden Schenkelbohrungen 11b des oberen Halteschenkels 5 sind nicht dargestellte Selbstbohrschrauben angeordnet. Die Agraffe 1 und das Agraffenprofil 7 sind durch die Selbstbohrschrauben, die durch den oberen Profilschenkel 17 gebohrt wurden, kraftschlüssig miteinander verbunden, sodass die Fassadenplatte 2 nicht mehr bewegt werden kann. In den Ausnehmungen 9 der Längsnut 8 der Agraffe 1 ist zumindest ein festgezogener Hinterschnittanker bzw. Blindbefestiger 10 angeordnet, der die Fassadenplatte 2 mit der Agraffe 1 fest verbindet.

Zwischen dem Rückenschenkel 4 der Agraffe 1 und der Fassadenplatte 2 ist ein flexibles Einlegeelement 15 vorgesehen, nämlich eine Scheibe aus Moosgummi mit Aussparungen. Die Dimensionierung und Platzierung der Aussparungen und die Dicke des Einlegeelements 15 sind von dem verwendeten Hinterschnittanker 10 abhängig. Durch das Einlegeelement 15 können Hohlräume 21 zwischen der Agraffe 1 und der Fassadenplatte 2 vermieden werden.

Bei Montage der Agraffe 1 an einer Fassadenplatte 2 werden die an der Fassadenplatte 2 fixierten Hinterschnittanker bzw. Blindbefestiger 10 mit dem Einlegeelement 15 und den Agraffen 1 kraftschlüssig verbunden.

Das Einlegeelement 15 ist in diesem Ausführungsbeispiel rechteckig und in seiner Fläche kleiner als die Fläche des Rückenschenkels 4 der Agraffe 1.

Die Erfindung beschränkt sich nicht auf die Ausführungsbeispiele, sondern umfasst sämtliche Vorrichtungen und Verfahren im Rahmen der nachfolgenden Patentansprüche.

### Bezugszeichenliste

- 1: Agraffe
- 2: Fassadenplatte
- 3: Wandstütze
- 4: Rückenschenkel
- 5: Oberer Halteschenkel
- 6: Unterer Halteschenkel
- 7: Agraffenprofil
- 8: Längsnut
- 9: Ausnehmung
- 10: Hinterschnittanker oder Blindbefestiger
- 11, 11a, 11b: Schenkelbohrung
- 12: Eingriffsnut
- 13: Justierschraube
- 14: Klemmlasche
- 15: Einlegeelement
- 16: Basisschenkel
- 17: Oberer Profilschenkel
- 18: Unterer Profilschenkel
- 19: Keilprofil
- 20: Steg
- 21: Hohlraum
- 22: Nut
- 23: Vorsprung
- 24: Einschubelement

## Patentansprüche

1. Agraffe (1) zur Befestigung einer Fassadenplatte (2) an einer Wandstütze (3) oder an einer Wand, umfassend:
a. einen im Wesentlichen planen Rückenschenkel (4), der zur Befestigung an der Fassadenplatte (2) ausgebildet ist, sowie
b. zwei sich im Wesentlichen orthogonal vom Rückenschenkel (4) erstreckende Halteschenkel (5, 6) zur formschlüssigen Verbindung mit einem, an der Wandstütze (3) angeordneten Agraffenprofil (7),
**dadurch gekennzeichnet, dass**
c. am Rückenschenkel (4) eine in Längsrichtung der Agraffe (1) verlaufende **Längsnut** (8) mit **Ausnehmungen** (9) vorgesehen ist, wobei die Längsnut (8) und die Ausnehmungen (9) dazu ausgebildet sind, unterschiedliche Verbindungsmittel, insbesondere unterschiedlich geformte Hinterschnittanker (10) und/oder Blindbefestiger, zur bündigen Befestigung der Fassadenplatte (2) an der Agraffe (1) formschlüssig aufzunehmen.

2. Agraffe (1) nach Anspruch 1, **dadurch gekennzeichnet, dass** ein **oberer Halteschenkel (5)** als im Wesentlichen C-förmiges Winkelprofil ausgebildet ist, dessen Ende beabstandet und im Wesentlichen parallel zum Rückenschenkel (4) verläuft, und der einen Schenkelabschnitt aufweist, der sich im Wesentlichen orthogonal zum Rückenschenkel (4) erstreckt und der zumindest eine Schenkelbohrung (11) aufweist.

3. Agraffe (1) nach Anspruch 1 oder 2, **dadurch gekennzeichnet, dass** ein **unterer Halteschenkel (6)** als im Wesentlichen Z-förmiges Winkelprofil ausgebildet ist, dessen Ende beabstandet und im Wesentlichen parallel zum Rückenschenkel (4) verläuft, und der im Wesentlichen orthogonal vom Rückenschenkel (4) vorsteht, sodass zwischen dem Rückenschenkel (4) und dem unteren Halteschenkel (6) eine Eingriffsnut (12) gebildet ist.

4. Agraffe (1) nach einem der Ansprüche 2 oder 3, umfassend ein Justiermittel, insbesondere eine zur Justierung der Position der Agraffe (1) relativ zum Agraffenprofil (7) in die Schenkelbohrung (11) einschraubbare Justierschraube (13), **dadurch gekennzeichnet, dass** die Länge der Justierschraube (13) geringer ist als die Länge des umgebogenen Endes des oberen Halteschenkels (5), sodass die eingeschraubte Justierschraube (13) niemals über das Ende des oberen Halteschenkels (5) ragt.

5. Agraffe (1) nach einem der Ansprüche 2 bis 4, **dadurch gekennzeichnet, dass** im oberen Halteschenkel (5) zwei oder mehr Schenkelbohrungen (11a, 11b) vorgesehen sind, wobei eine erste Schenkelbohrung (11a) zur Aufnahme einer Justierschraube (13) und eine zweite Schenkelbohrung (11b) zur Aufnahme eines Fixiermittels, insbesondere einer Selbstbohrschraube zur Verschraubung der Agraffe (1) mit dem Agraffenprofil (7), ausgebildet ist.

6. Agraffe (1) nach einem der Ansprüche 1 bis 5, **dadurch gekennzeichnet, dass** der Rückenschenkel (4) eine nach unten spitz zulaufende Klemmlasche (14) bildet, sodass die Eingriffsnut (12) einen sich zum Ende des Rückenschenkels (4) konisch erweiternden Querschnitt aufweist.

7. Agraffe (1) nach Anspruch 6, **dadurch gekennzeichnet, dass** sich die Eingriffsnut (12) in einem Winkel von etwa 1° bis etwa 10°, insbesondere etwa 5°, zum Ende des Rückenschenkels (4) erweitert.

8. Agraffe (1) nach Anspruch 6 oder 7, **dadurch gekennzeichnet, dass** sich die Klemmlasche (14) weiter nach unten erstreckt als der untere Halteschenkel (6), insbesondere um eine Distanz von etwa 0,5 mm bis etwa 5 mm.

9. Agraffe (1) nach einem der Ansprüche 1 bis 8, **dadurch gekennzeichnet, dass** sie aus einem Metall oder einer Metalllegierung, bevorzugt aus Aluminium oder einer Aluminiumlegierung, insbesondere aus Aluminium EN-AW 6063 T66, gebildet ist und ein Gewicht von etwa 35 g bis etwa 50 g aufweist, insbesondere ein Gewicht von etwa 42 g.

10. Agraffe (1) nach einem der Ansprüche 1 bis 9, umfassend ein flexibles Einlegeelement (15), insbesondere aus Moosgummi, zur Anordnung zwischen dem Rückenschenkel (4) und der Fassadenplatte (2), **dadurch gekennzeichnet, dass** das Einlegeelement (15) vorzugsweise Aussparungen zur Aufnahme von zumindest einem Verbindungsmittel, insbesondere einem Hinterschnittanker (10) und/oder Blindbefestiger, umfasst, und wobei die Fläche des flexiblen Einlegeelements (15) vorzugsweise kleiner oder gleich der Fläche des Rückenschenkels (4) ist.

11. Agraffe (1) nach einem der Ansprüche 1 bis 10, **dadurch gekennzeichnet, dass** die Agraffe (1) mit einer die Gleitfähigkeit erhöhenden Beschichtung, etwa einer Pulverbeschichtung oder einem Eloxal versehen ist.

12. **System** umfassend eine Agraffe (1) nach einem der Ansprüche 1 bis 11 und ein Agraffenprofil (7) mit einem im Wesentlichen planen Basisschenkel (16), **dadurch gekennzeichnet, dass** die Agraffe (1) und das Agraffenprofil (7) formschlüssig verbindbar oder verbunden sind.

13. System nach Anspruch 12, **dadurch gekennzeichnet, dass** das Agraffenprofil (7) einen oberen Profilschenkel (17) aufweist, der schmäler als der obere Halteschenkel (5) der Agraffe (1) ist, sodass der obere Halteschenkel (5) der Agraffe (1) den oberen Profilschenkel (17) des Agraffenprofils (7) formschlüssig umfassen kann.

14. System nach Anspruch 12 oder 13, **dadurch gekennzeichnet, dass** das Agraffenprofil (7) einen unteren Profilschenkel (18) mit einem umgebogenen Ende umfasst, das als ein sich zu seinem Ende verjüngendes Keilprofil (19) ausgebildet ist, dessen Querschnitt im Wesentlichen dem Querschnitt der Eingriffsnut (12) der Agraffe (1) entspricht, sodass das Keilprofil (19) formschlüssig in die Eingriffsnut (12) der Agraffe (1) einbringbar ist.

15. System nach Anspruch 14, **dadurch gekennzeichnet, dass** das Keilprofil (19) des Agraffenprofils (7) im Wesentlichen so lang ist wie die Eingriffsnut (12) der Agraffe (1).

16. System nach einem der Ansprüche 12 bis 15, **dadurch gekennzeichnet, dass** das Agraffenprofil (7) mit einer die Gleitfähigkeit erhöhenden Beschichtung, etwa einer Pulverbeschichtung oder einem Eloxal versehen ist.
